# EUROPEAN PATENT APPLICATION

(11) **EP 4 570 478 A1**
(43) Date of publication of application: **18.06.2025**
(21) Application number: 24219300.1
(22) Date of filing: 12.12.2024
(51) Int. Cl.: B29C 64/124, B29C 64/232, B29C 64/264, B33Y 10/00, B33Y 30/00

(54) **DEVICE AND METHOD FOR MAKING A STEREOLITHOGRAPHIC OBJECT**

(30) Priority: 13.12.2023 AU 2023904035
(71) Applicant: Zydex Pty Ltd, Alexandria, New South Wales 2015 (AU)
(72) Inventor: ELSEY, Justin, Alexandria, 2015 (AU)
(74) Representative: Bryers Intellectual Property Ltd

(57) **Abstract**

Disclosed herein is apparatus (10) for making a stereolithographic object, the apparatus (10) comprising:
a material receiving surface (12) for receiving a material that is hardenable by absorption of actinic light (19);
an actinic light source (14) configured to generate the actinic light;
a build platform (16) comprising a build surface (24) for making the stereolithographic object thereon;
a positioner (18) configured to removably receive the build platform (16) and operable to change a distance between the build surface (24) and the material receiving surface (12); and
a magnetic fastener (22) switchable between an unfastened state, and a fastened state, and configured for releasable fastening of the build platform (16) to the positioner (18).

## Description

### Technical field

The disclosure herein generally relates to devices and methods for making a stereolithographic object.

### Background

Additive fabrication - also known as *additive manufacturing* and *3D printing* - is a computer aided manufacturing technique, in which at least one material (the "material") is fused to fabricate an object ("object"). A machine that uses additive fabrication to fabricate an object is generally known as a three-dimensional printer ("3D printer"). There are many applications of additive manufacturing.

An additive fabrication process is stereolithography - also known as vat polymerisation. An object fabricated by stereolithography (a "stereolithographic object") - is fabricated layer by layer - and so comprises a plurality of solid layers fused together. The first solid layer may be fabricated ("built" or "made") on a build surface of the 3D printer. Each subsequent solid layer may be fabricated on a preceding solidified layer. Each solid layer is formed by polymerisation of a material in the form of photohardenable liquid or resin, which hardens the photohardenable liquid. Polymerisation is initiated by exposing the photohardenable liquid to an actinic light. Photohardenable liquids may generally comprise at least one of polymerizable monomers and oligomers. Photohardenable liquids may also generally comprise a photoinitiator that can initiate polymerization when exposed to actinic light.

The build surface may be removably attached to the rest of the 3D printer. Subsequent to fabrication of the object, the operator may detach the build surface from the rest of the 3D printer to facilitate at least one of removal of the fabricated object and cleaning the build surface. The 3D printer may have a manually operable mechanical fastener for attachment and detachment of the build surface. The build surface may subsequently be reattached in preparation for fabricating a subsequent object, however reattachment may be imprecise and fiddly, which may impact on the quality of the subsequently fabricated object.

### Summary

Disclosed herein is an apparatus for making a stereolithographic object. The apparatus comprises a material receiving surface for receiving a material that is hardenable by absorption of actinic light. The apparatus comprises an actinic light source configured to generate the actinic light. The apparatus comprises a build platform comprising a build surface for making the stereolithographic object thereon. The apparatus comprises a positioner configured to removably receive the build platform and operable to change a distance between the build surface and the material receiving surface. The apparatus comprises a magnetic fastener switchable between an unfastened state, and a fastened state, and configured for releasable fastening of the build platform to the positioner.

In an embodiment, the magnetic fastener can be electrically switched between the unfastened state and the fastened state. The magnetic fastener may comprise an electromagnet. An electromagnet driver circuit may be operationally coupled to the electromagnet.

An embodiment comprises a processor in signal communication with each of the actinic light source, positioner and magnetic fastener, and configured to control each of the actinic light source, positioner and magnetic fastener.

In an embodiment, the build platform defines a positioner receiving cavity and a positioner receiving cavity port for insertion of the positioner into the positioner receiving cavity.

In an embodiment, the build platform comprises a strike surface facing into the positioner receiving cavity. The strike surface may be arranged to rest on the positioner. The build platform may comprise a bottom wall and a positioner stop intermediate the strike surface and the bottom wall for interference with the positioner.

An embodiment comprises mutually attracting ferromagnetic components arranged to define a fiducial spatial arrangement between the positioner and the build platform.

In an embodiment, the material receiving surface is a surface of an actinic light transparent window that is a wall of a vessel for the material.

In an embodiment, the magnetic fastener comprises an upwardly orientated magnetic pole surface.

Disclosed herein is a method for making an object. The method comprises switching a magnetic fastener between an unfastened state and a fastened state. The magnetic fastener is configured for releasable fastening of a build platform to a build platform positioner configured to removably receive the build platform. The method comprises operating the build platform positioner to move the build platform. The method comprises operating an actinic light source to generate an actinic light source illuminating a material receiving surface for receiving a material that is hardenable by absorption of the actinic light.

In an embodiment, switching the magnetic fastener between the unfastened state and the fastened state comprises electrically switching the magnetic fastener.

In an embodiment, switching the magnetic fastener between the unfastened state and the fastened state comprises controlling an electromagnet driver circuit operationally coupled to an electromagnet of the magnetic fastener.

An embodiment comprises causing the electromagnetic driver circuit to ramp the magnitude of the current through the electromagnetic.

An embodiment comprises degaussing.

An embodiment comprises a processor sending a plurality of signals to the magnetic fastener, build platform positioner and actinic light source to cause at least one of the steps to be executed. The processor may send the plurality of signals as defined by at least one of program instructions and a computer program.

An embodiment comprises at least one of connecting and separating the build platform and the build platform positioner.

Disclosed herein is processor readable tangible media that includes program instructions which when executed by a processor causes the processor to perform a method in accordance with the above disclosure.

Disclosed herein is a computer program for instructing a processor, which when executed by the processor causes the processor to perform a method in accordance with the above disclosure.

Features from any of the above disclosures may be combined as suitable and desired.

### Brief description of the figures

Embodiments will now be described by way of example only with reference to the accompanying figures in which:
Figures 1 shows a schematic diagram of an embodiment of a device for making a stereolithographic object in a first configuration.
Figure 2 shows a schematic diagram of the device of figure 1 in a second configuration, in which a build platform thereof is separated.
Figures 3 and 4 show photographs of the device of figure 1, without and with the build platform.
Figure 5 shows the device of figure 1, wherein the build platform has been moved from a *home* position shown in figure 1 to a *print* position.
Figure 6 shows a cutaway side elevation view of a positioner for receiving and subsequently positioning the build platform.
Figure 7 shows a cutaway side elevation view of the build platform.
Figure 8 shows a cutaway side elevation view of the build platform received by the positioner.
Figure 9 shows a circuit diagram for a magnetic fastener driver circuit of the device of figure 1.
Figure 10 shows a schematic diagram of an actinic light source of the device of figure 1.
Figure 11 shows a schematic diagram of an example of a processor for the device of figure 1.

### Description of embodiments

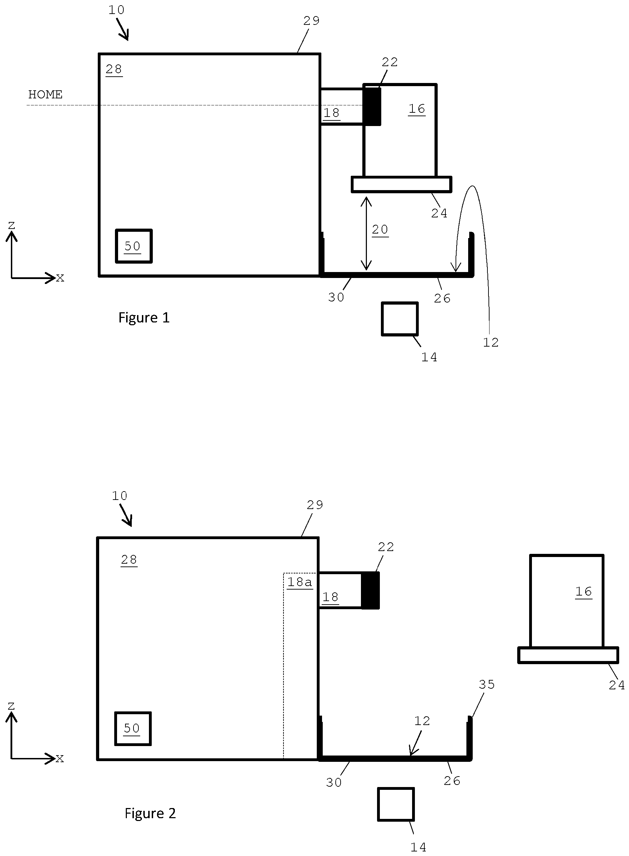

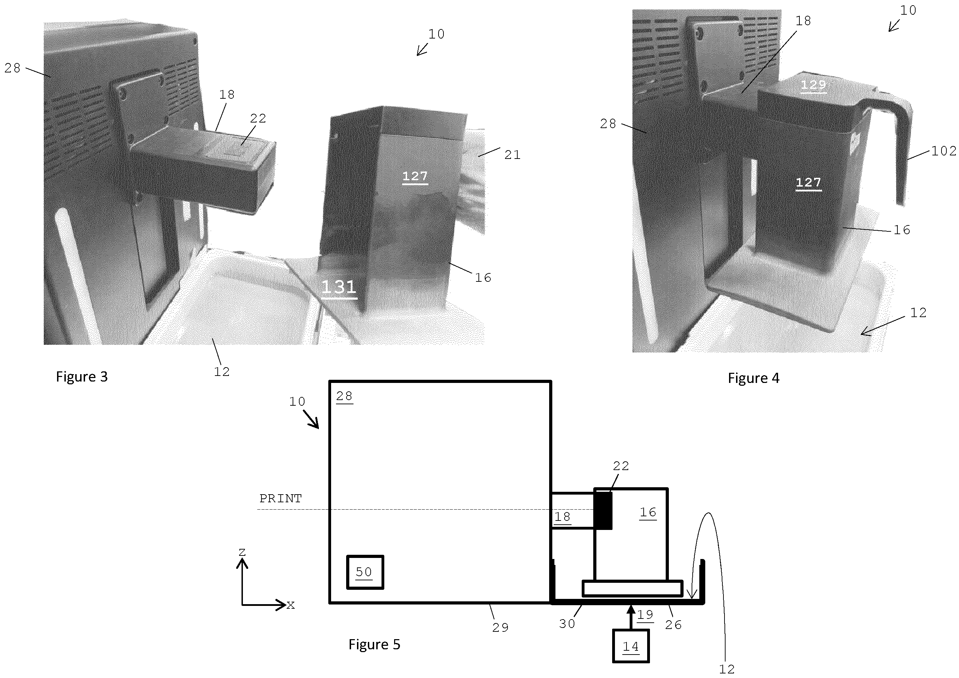

Figure 1 shows a schematic diagram of a device for making a stereolithographic object ("object"), the device being generally indicated by the numeral 10. The apparatus 10 comprises an actinic light source 14 configured to generate an actinic light 19 (figure 5). The apparatus 10 comprises a material receiving surface 12 for receiving a material in the form of a liquid (which may be a resin) that is hardenable by absorption of the actinic light 19. The apparatus 10 comprises a build platform 16 comprising a build surface 24 for making the stereolithographic object thereon. As shown in figure 2, the build platform 16 can be separated. The apparatus 10 comprises a positioner 18 configured to removably receive the build platform 16 and operable to change a separation 20 between the build platform 16 - and so the build surface 24 thereof - and the material receiving surface 12. The apparatus 10 comprises a magnetic fastener 22 electrically switchable between an unfastened state, and a fastened state. The magnetic fastener 22 is configured for releasable fastening of the build platform 16 to the positioner 18.

The material receiving surface 12 is a surface of an actinic light transparent window 26. When the build platform 16 is received, the window 26 is intermediate the actinic light source 14 and the build surface 24. The material receiving surface 12 is generally, in use, orientated to be upwardly orientated. In the present but not all embodiments, the actinic light 19 has a wavelength of 385 nm for materials responsive to light of that wavelength, however the actinic light source 14 may be adapted to generate actinic light of another wavelength for another selected material. The window 26 comprises a 6 mm thick plate of fused silica with a 2 mm thick siliconerubber coating at the material receiving surface 12. The window 26 is transparent to the actinic light 19. The window 26 is a wall - in this embodiment a bottom wall - of a vessel 30 for containing the liquid when received by the material receiving surface 12. The actinic light source 14 is arranged to illuminate the material received by the material receiving surface 12 with the actinic light 19, the actinic light 19 passing through the window 26. The window 26 may take any suitable and desired form.

The magnetic fastener 22 comprises an electromagnet that can be electrically switched between the unfasted state and the fastening state. This allows for releasable attachment of the build platform 16.

The device 10 can be used to perform an embodiment of a method for making an object, example steps of which follow. The steps are segmented into stages for pedagogical purposes:
- Stage 1 - preparation:
   ∘ Photohardenable material in the form of a liquid is disposed on the material receiving surface 12, within the vessel 30.
   ∘ The build platform 16 is positioned by a user - for example a person or a robot - such that it is received by the positioner 18. Figure 3 shows a user 21 moving the build platform 16 into the position shown in figure 4. The build platform 16 comprises an optional handle 102 for the user to move the build platform 16. The user 21 generally positions the build platform 16 when at least one of the following are satisfied:
      □ The build platform is at a *home* position, as shown in figure 1. When at the home position, the separation 20 between the positioner 18 and the material receiving surface 12 is greater than at least one of the thickness of the object's first layer, and the depth of the vessel 30.
      □ The magnetic fastener is in the unfastened state.
- Stage 2 - object fabrication:
   ∘ The magnetic fastener 22 is switched to the fastened state so that the build platform 16 and the positioner 18 are magnetically fastened together.
   ∘ The positioner 18 is operated, moving in the negative z direction indicated, to reduce the separation 20 between it and the material receiving surface 12, such that the build surface 24 is at a printing position and is submerged in the photohardenable liquid. Figure 5 shows the positioner 18 at the *printing* position, wherein the separation between the built surface 24 and material receiving surface 12 is equal to the thickness of the layer to be printed.
   ∘ The actinic light source 14 is operated to generate the actinic light 19 that solidifies at least some of a layer of the liquid between the build surface 24 and the material receiving surface 12. The first solidified layer is formed attached to the build surface 24. The actinic light ceases when the first layer solidifies.
   ∘ Subsequently layers of the object are similarly formed, however between formation of each of the layers, the build platform 16 is moved away from the material receiving surface 24 by operation of the positioner 18, by a distance equal to the thickness of the next layer to be formed, generally but not necessarily 10 µm - 100 µm, but it may be less for a finer resolution or more for a courser resolution.
- Stage 3 - fabricated object removal and cleaning:
   ∘ The positioner 18 is operated, moving in the positive z direction, to increase the separation between it and the material receiving surface, for example such that the positioner is moved to the home position.
   ∘ The magnetic fastener 22 is switched to the unfastened state so that build platform 16 and the positioner 16 are no longer magnetically attached.
   ∘ The build platform 16 is separated from the positioner by the user 21, enabled by the unfastened state.
   ∘ The fabricated object can be removed from the separated positioner 18, for example by using a prising tool, applying a shearing force, or generally by any suitable and desired way.
   ∘ Optionally, the build surface 24 of the separated build platform 18 is cleaned.

Generally, any suitable or desired photohardenable liquid may be used, examples of which include photohardenable liquids commercially supplied by ASIGA, Australia, *Somos NEXT* from DSM Somos, USA, and KZ-1860-CL from Allied PhotoPolymers, USA. Alternative examples may optionally comprise fillers, examples of which include but are not limited to glass or ceramic powder and may be in the form of a paste.

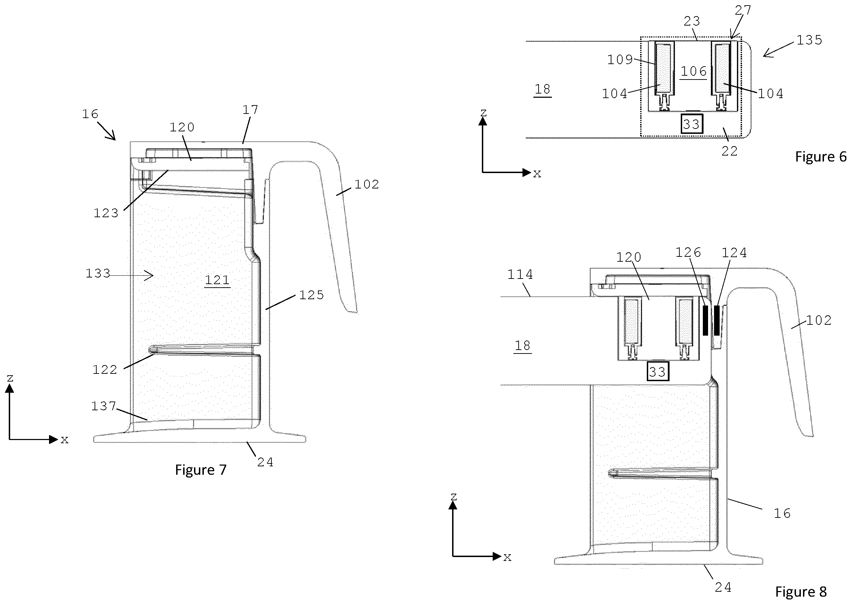

The positioner 18 comprises a distal end 135 in the form of an arm (figure 6) that extends laterally from the body 28. The positioner 18 is motorized, and comprises an actuator 18a - shown in dashing in figure 2 - that is disposed in the body 28 and may comprises any one or more of linear motors, drive belts, stepper motors, rack and pinion arrangements, for example, or generally any suitable components arranged to provide linear motion. The positioner 18 is optionally able to acquire a position within 0.01 - 100 µm. That is, the positioner has "micron precision".

The photohardenable liquid received by the build surface 12 - having a viscosity - resists movement of the build surface 24 therethrough. Any resulting separation of the build platform 16 from the positioner 18, or relative movement, may result in reduced fabricated object quality, printing failure and/or equipment damage. Fastening the positioner 18 and the build platform 16 together, however, may prevent such unwanted separation or relative movement.

Figure 6 shows a cutaway side elevation view of the positioner 18. The magnetic fastener 22 comprises an electromagnet 27 comprising wire coil 104 (with a central axis in the z direction) disposed in a channel 109 encircling a ferromagnetic core 106 comprising one or more of iron, silicon steel, ferrite or generally any suitable and desired material. The electromagnet 27 comprises an upwardly orientated magnetic pole surface 23 that is facing away from the material receiving surface 12, which in use receives the build platform 16 brought down upon it. The surface 23 is slightly proud which may improve contact between the build platform 16 and the positioner 18.

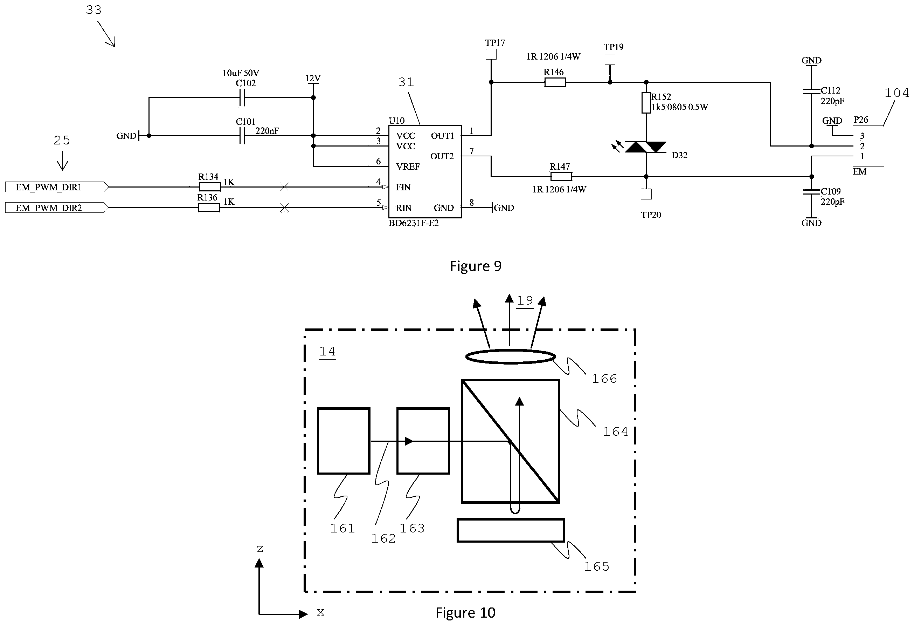

The magnetic fastener 22 comprises an electronic magnetic fastener driver circuit 33, a schematic diagram of which is shown in figure 9. In an alternative embodiment, however, the driver circuit 33 is within the body 28 and may be disposed wherever is suitable and desired. The circuit 33 comprises a BD2631F-E2 integrated circuit (IC) 31 which is a H-bridge DC brush motor driver. Pins 4 and 5 of IC 31 are in signal communication with a general-purpose input output (GPIO) interface of the processor 50, or a USB to GPIO breakout board received by a USB port of the processor 50. The processor 50 generates pulse width modulated signals 25 at the pins 4,5, one signal for signaling a forward current through the wire coil 104 and another signal for signaling a reverse current through the coil 104. Pins 1 and 7 of the IC 31 are in communication with the wire coil 104. The target current between pins 1 and 7 is generally in the range of 140-300 mA at 12 V. The processor 50 reverses the current in the wire coil 104 to demagnetize the core 106 when suitable and desired, for example after the object is fabricated. This may make it easier to remove the build platform 16.

An example of operation of the electronic driver circuit by the processor 50 is as follows:
- When the processor switches the magnetic fastener 22 from the unfastened to the fastened state, the duty cycle of the electric current through the wire coil 104 is ramped up by changing the duty cycle of pulse width signal generated by the processor 50. This may reduce electromagnetic emissions generated by the changing current in the coil.
- When the wire coil current reaches the target current, the signal to the relevant IC pin 4,5 has a 100% duty cycle.
- When the magnetic fastener is switched from the fastened to the unfastened state, the current is ramped down - for example over 500 ms - then is reversed for 40% of the target current for degausing. This degaussing operation may remove the residual magnetism in the build platform 16 and/or electromagnet 27.
- Once 40% reverse current has been reached, the current is ramped back to zero.

A brake signal is optionally sent by the processor 50 to the driver 33 to short the wire coils 104. This may reduce the residual magnetism of the wire coil 104.

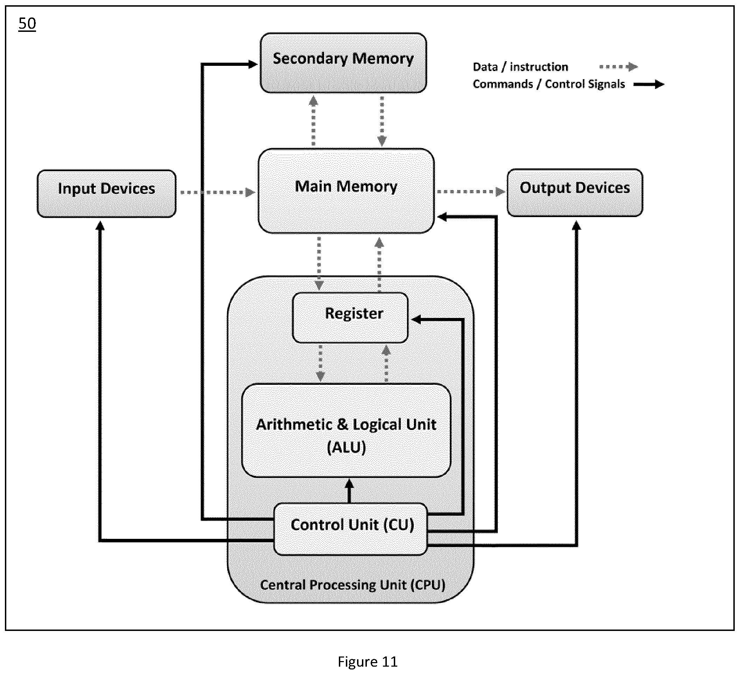

The device 10 comprises processor 50 shown in figure 11, which is optionally housed in enclosure 29. In the precent embodiment, the processor 50 is in the form of a single board computer, a suitable example of which is the LattePanda Mu. The processor 50 comprises:
- non-transitory processor readable tangible media (secondary memory) in the form of a non-volatile 250 Gigabyte (Gb) solid-state drive, or generally any suitable and desired media an example of which includes but is not limited to a flash memory card
- volatile memory in the form of 8 Gb of RAM (main memory)
- an Intel N100 central processing unit
- communication interfaces suitable for communication with the components, including for example the positioner 18, the light source 14, the magnetic fastener 22, and optionally other components to coordinate the device 10 to make the object. Communication may be via wires, cables, wireless, or any other suitable means using, for example, at least one of USB, GPIO UART and I2C for example

The processor's non-transitory processor readable tangible media includes program instructions and /or a computer program that when executed by the processor 50 causes the processor 50 to perform an embodiment of a method for making an object, for example a method described herein. The computer program may, for example, be written in the Python computer programming language and use suitable and desired packages, or written in any suitable programming language including LabVIEW and C. The program instruction may be in the form of executable binary files compiled from source code written in generally any suitable and desired computer programming language, an example of which is, but not limited to, C.

Figure 7 shows a cutaway side elevation view of the build platform 16. As seen in figures 3, 4 and 7, build platform 16 comprises a back wall 125, opposite side walls 127, top wall 129, and a bottom wall 131, which cooperate to define a positioner receiving cavity 121 and a positioner receiving cavity port 133 into which the positioner 18 can be inserted. The port 133 is dimensionally larger than the distal end 135 of the positioner 18 by approximately 10 mm, which generally may allow easy insertion of the distal end 135 of the positioner 18 into cavity 121, making this operation relatively straightforward. Broadly speaking, the port 133 is wide open for the distal end 135 of the positioner 18, and consequently:
- precision movement by the user may not be required when bringing the positioner 18 and the build platform 16 together, and.
- the build platform 16 can be removed from the apparatus 10 in an upwardly motion, which facilitates lifting of the printed objects up over the sidewall 35 of the vessel 30.

As seen in figure 7, a strike plate 120 comprising an inwardly facing strike surface 123 is at the top of the positioner receiving cavity 121. The strike plate 120 is attached with mechanical fasteners in the form of screws. The strike plate 120 comprise ferromagnetic material magnetically attracted to the electromagnet 27, and which is in the form of steel, or generally any suitable and desired ferromagnetic material, for example iron which is magnetically attracted to the electromagnet when operational.

The build platform 16 also comprises stop 122 that can interfere with positioner 18 to prevent positioner 18 contacting the inside bottom 137 of the build platform 18 in which case material may be inadvertently transferred from the bottom of the build platform 16 to the positioner 18.

As shown in figure 8, each of the positioner 18 and the build platform 16 comprise mutually attracting ferromagnetic elements 126, 124 in the form of a plurality of permanent magnets that have counter magnetic orientations so that they are attracted to each other. This magnetically defines the position of the build platform 16 with respect to the positioner 18 in the x-direction and substantially also in the y-direction which is orthogonal to both the x and z directions. The magnets 124,126 generally snap into place, providing haptic feedback to a user as to when the magnets are engaged. A spatial relationship between the positioner 18 and build platform 16 is defined. No special effort by the user is required for a suitable alignment to be achieved. In this embodiment, the magnets 126, 124 define a fiducial spatial arrangement, that is the defined spatial arrangement can be trusted to have a fixed relative position and a fixed relative orientation. Generally, any number of magnets having any suitable arrangement may be used. For example, each of the positioner 18 and the build platform 16 may have 2 linearly arranged magnets, or more than 2 polygon-arranged magnets.

Figure 10 shows a schematic diagram of the actinic light source 14, which comprises light source 161 emitting light 162, relay optics 163, turning prism 164, spatial light modulator 165 controllable by controller 220, and projection lens 166. Actinic light source 14 can be activated so that it emits spatially and/or structured actinic light 19 capable of selectively hardening areas of the material to form a layer of the object. Generally, any suitable form of light source 161 may be used, for example a steered laser-beam light source.

The object made may generally be any suitable object, examples of which include but are not limited to:
- medical prosthetics and implants
- dental prosthetics and implants
- hearing aid casings
- prototypes and models
- jewellery
- artifact replicas
- miniatures
- goggles
- mouth guards
- mould master patterns, and
- industrial components.

Now that embodiments have been described, it will be appreciated that some embodiments may have some of the following advantages:
- The magnetic fastener may prevent unwanted separation or movement of the build platform relative to the positioner, which may result in reduced fabricated object quality, printing failure and equipment damage.
- The magnetic fastener may permit a user to install or remove the build platform relatively quickly.
- The magnetic fastener may provide backlash-free fixing of the build platform.
- The magnetic fastener may not require precise manual alignment for installation of the build platform, because the apparatus may define the alignment, while providing repeatable fiducial positioning of the build platform.
- The use of a magnetic fastener may facilitate automation of an additive manufacturing process, and may be easier for a robot to operate than a mechanical fastener.

Variations and/or modifications may be made to the embodiments described without departing from the spirit or ambit of the invention. For example:
- The magnetic fastener may comprise at least one permanent magnet, and the state of the magnetic fastener may be changed by electrically moving (e.g. rotating and/or translating) the at least one permanent magnet, or electrically moving a magnetic shield.
- The ferromagnetic materials may comprise generally any suitable and desired material that are magnetised or not, examples of which include ferrite, iron, steel, mu-metal, alnico, rare earth metal alloys, or generally any suitable ferromagnetic material, or combinations thereof.
- The processor may be an external peripheral in communication with the other components via a cable connecting the external peripheral processor and the body.
- Generally, the window may comprise any suitable and desired material of any suitable and desired thickness. For example, the window may comprise a flexible polymeric sheet supported by a plate of fused silica.
- The electromagnet and the ferromagnetic material may switch positions, or there may be one of each in each of the positioner and build platform, for example. Generally, the magnet fastener may take generally any suitable and desired form.
- The magnetic fastener may be additionally, or alternatively, operated by at least one of a user operating a user control, for example a button or switch, and a command sent to the processor through an onboard network interface, which may be an Ethernet, Wi-Fi or Bluetooth network interface, for example. In the case of a switch, it may be electrically in series with the electromagnet, or it may subsequently be used as logical high/low control which may be interpreted by the processor, which may subsequently control the current through the electromagnet. Generally, the magnetic fastener may be operated in any suitable and desired way.
- While the described embodiments are configured for a user to perform the steps of positioning the build platform on the positioner, and separating the build platform from the positioner, alternative embodiments are configured to partially or fully automate these steps.
- Generally, any suitable processor can be used, examples of which include a desktop personal computer with USB GPIO breakout and USB ports controlled with a Python program, and a suitably configured field programable gate array.
- Alternative embodiments of methods may:
   ∘ Not comprise all of the described steps or stages
   ∘ Have some of the steps moved from one stage to another, and
   ∘ Have additional or alternative steps as suitable and desired.
- Generally, any suitable and desired mechanical fasteners may be used, for example screws, rivets and clips. Alternatively, or additionally, a suitable adhesive or another form of attachment may be used.

The present embodiments are, therefore, to be considered in all respects as illustrative and not restrictive. Reference to a feature disclosed herein does not mean that all embodiments must include the feature.

Prior art, if any, described herein is not to be taken as an admission that the prior art forms part of the common general knowledge in any jurisdiction.

In the claims which follow and in the preceding description of the invention, except where the context requires otherwise due to express language or necessary implication, the word "comprise" or variations such as "comprises" or "comprising" is used in an inclusive sense, that is to specify the presence of the stated features but not to preclude the presence or addition of further features in various embodiments of the invention.

## Claims

1. An apparatus for making a stereolithographic object, the apparatus comprising:
a material receiving surface for receiving a material that is hardenable by absorption of actinic light;
an actinic light source configured to generate the actinic light;
a build platform comprising a build surface for making the stereolithographic object thereon;
a positioner configured to removably receive the build platform and operable to change a distance between the build surface and the material receiving surface; and
a magnetic fastener switchable between an unfastened state, and a fastened state, and configured for releasable fastening of the build platform to the positioner.

2. An apparatus defined by claim 1, wherein the magnetic fastener can be electrically switched between the unfastened state and the fastened state.

3. An apparatus defined by claim 1 or claim 2 wherein the magnetic fastener comprises an electromagnet.

4. An apparatus defined by claim 3 comprising an electromagnet driver circuit operationally coupled to the electromagnet.

5. An apparatus defined by any one of the preceding claims comprising a processor in signal communication with each of the actinic light source, positioner and magnetic fastener, and configured to control each of the actinic light source, positioner and magnetic fastener.

6. An apparatus defined by any one of the preceding claims wherein the build platform defines a positioner receiving cavity and a positioner receiving cavity port for insertion of the positioner into the positioner receiving cavity.

7. An apparatus defined by claim 6 wherein the build platform comprises a strike surface facing into the positioner receiving cavity, wherein the strike surface is arranged to rest on the positioner.

8. An apparatus defined by claim 7 wherein the build platform comprises a bottom wall and a positioner stop intermediate the strike surface and the bottom wall for interference with the positioner.

9. An apparatus defined by any one of the preceding claims comprising mutually attracting ferromagnetic components arranged to define a fiducial spatial arrangement between the positioner and the build platform.

10. An apparatus defined by any one of the preceding claims wherein the material receiving surface is a surface of an actinic light transparent window that is a wall of a vessel for the material.

11. An apparatus defined by any one of the claims 1 to 10 wherein the magnetic fastener comprises an upwardly orientated magnetic pole surface.

12. A method for making an object, the method comprising the steps of:
switching a magnetic fastener between an unfastened state and a fastened state, the magnetic fastener being configured for releasable fastening of a build platform to a build platform positioner configured to removably receive the build platform;
operating the build platform positioner to move the build platform;
operating an actinic light source to generate an actinic light source illuminating a material receiving surface for receiving a material that is hardenable by absorption of the actinic light.

13. A method defined by claim 12 wherein switching the magnetic fastener between the unfastened state and the fastened state comprises electrically switching the magnetic fastener.

14. A method defined by claim 13 wherein switching the magnetic fastener between the unfastened state and the fastened state comprises sending a control signal to an electromagnet driver circuit operationally coupled to an electromagnet of the magnetic fastener.

15. A method defined by any one of the claims 12 to 14 comprising degaussing.
